# EUROPEAN PATENT APPLICATION

(11) **EP 4 674 703 A1**
(43) Date of publication of application: **07.01.2026**
(21) Application number: 24707916.3
(22) Date of filing: 06.02.2024
(51) Int. Cl.: B60T 7/12, B60T 8/17, B60T 8/26, B60T 8/32, B62L 3/08

(54) **CONTROL DEVICE AND CONTROL METHOD**

(30) Priority: 28.02.2023 JP 2023030569
(71) Applicant: Robert Bosch GmbH, 70442 Stuttgart (DE)
(72) Inventor: SATO, Akira, Yokohama-shi, Kanagawa 224-8501 (JP); ONISHI, Yoshitsuna, Yokohama-shi, Kanagawa 224-8501 (JP); OSHIDA, Yuki, Yokohama-shi, Kanagawa 224-8501 (JP)
(74) Representative: Isarpatent
(86) International application number: PCT/IB2024/051053
(87) International publication number: WO 2024/180403

(57) **Abstract**

A decrease in braking force, which is not intended by a rider, is suppressed.

An execution section of a control device executes automatic speed control to automatically control a speed of a straddle-type vehicle. In a state where a braking force acting on a rear wheel does not depend on a brake operation using a first brake operating portion and a braking force acting on a front wheel does not depend on a brake operation using a second brake operating portion, in a situation where a braking force is automatically generated on at least one of the front wheel and the rear wheel by the automatic speed control, when the automatic speed control is canceled in response to an automatic speed control cancellation operation that is a brake operation using the brake operating portion for the other of the front wheel and the rear wheel without using the brake operating portion for the one wheel, the execution section executes a first control operation that automatically generates a braking force on the one wheel in a state where a braking force dependent on the brake operation using the brake operating portion for the other wheel acts on the other wheel.

## Description

### Technical Field

This disclosure relates to a control device and a control method capable of suppressing a decrease in braking force, which is not intended by a rider.

### Background Art

In the related art, various techniques that assist a rider in driving a straddle-type vehicle such as a motorcycle have been proposed. For example, in PTL 1, a driver assistance system that warns a rider of a motorcycle that the motorcycle inappropriately approaches an obstacle, based on information detected by a sensor device that detects an obstacle in a traveling direction or substantially in the traveling direction, has been disclosed.

### Citation List

### Patent Literature

PTL 1: JP2009-116882A

### Summary of Invention

### Technical Problem

By the way, as a technique for assisting the driving of a vehicle, there is automatic speed control that automatically controls the speed of the vehicle. It is considered that the automatic speed control is applied to a straddle-type vehicle. A first brake operating portion that is a brake operating portion for at least a front wheel and a second brake operating portion that is a brake operating portion for at least a rear wheel are provided to the straddle-type vehicle, and a rider can perform a brake operation using these brake operating portions. When a brake operation is performed by the rider during execution of the automatic speed control, the automatic speed control is canceled in response to the brake operation.

Here, in a situation where a braking force is automatically generated on at least one (for example, the rear wheel) of the front wheel and the rear wheel by the automatic speed control, a brake operation using the brake operating portion for the other (for example, the front wheel) of the front wheel and the rear wheel may be performed by the rider. In this case, the automatic speed control is canceled in response to the above-described brake operation, so that the braking force automatically generated on the one wheel (for example, the rear wheel) is released. As a result, a total braking force acting on the front wheel and the rear wheel may decrease against the rider's intention. Such a decrease in braking force, which is not intended by the rider, becomes a factor causing discomfort to the rider.

The present invention has been made in view of the above-described problems, and is intended to obtain a control device and a control method capable of suppressing a decrease in braking force which is not intended by a rider.

### Solution to Problem

According to the invention, there is provided a control device that controls a behavior of a straddle-type vehicle including a first brake operating portion that is a brake operating portion for at least a front wheel and a second brake operating portion that is a brake operating portion for at least a rear wheel, the device including: an execution section that executes automatic speed control to automatically control a speed of the straddle-type vehicle. In the automatic speed control, a braking force acting on the front wheel and a braking force acting on the rear wheel are controlled independently of each other. In a state where the braking force acting on the rear wheel does not depend on a brake operation performed by a rider of the straddle-type vehicle using the first brake operating portion, and the braking force acting on the front wheel does not depend on a brake operation performed by the rider using the second brake operating portion, in a situation where a braking force is automatically generated on at least one of the front wheel and the rear wheel by the automatic speed control, when the automatic speed control is canceled in response to an automatic speed control cancellation operation that is a brake operation performed by the rider using the brake operating portion for the other of the front wheel and the rear wheel without using the brake operating portion for the one wheel, the execution section executes a first control operation that automatically generates a braking force on the one wheel in a state where a braking force dependent on the brake operation performed by the rider using the brake operating portion for the other wheel acts on the other wheel.

According to the invention, there is provided a control method for controlling a behavior of a straddle-type vehicle including a first brake operating portion that is a brake operating portion for at least a front wheel and a second brake operating portion that is a brake operating portion for at least a rear wheel, the method including: causing an execution section of a control device to execute automatic speed control to automatically control a speed of the straddle-type vehicle. In the automatic speed control, a braking force acting on the front wheel and a braking force acting on the rear wheel are controlled independently of each other. In a state where the braking force acting on the rear wheel does not depend on a brake operation performed by a rider of the straddle-type vehicle using the first brake operating portion, and the braking force acting on the front wheel does not depend on a brake operation performed by the rider using the second brake operating portion, in a situation where a braking force is automatically generated on at least one of the front wheel and the rear wheel by the automatic speed control, when the automatic speed control is canceled in response to an automatic speed control cancellation operation that is a brake operation performed by the rider using the brake operating portion for the other of the front wheel and the rear wheel without using the brake operating portion for the one wheel, the execution section executes a first control operation that automatically generates a braking force on the one wheel in a state where a braking force dependent on the brake operation performed by the rider using the brake operating portion for the other wheel acts on the other wheel.

### Advantageous Effects of Invention

In the control device and the control method according to the invention, the execution section of the control device executes the automatic speed control to automatically control the speed of the straddle-type vehicle. In the automatic speed control, the braking force acting on the front wheel and the braking force acting on the rear wheel are controlled independently of each other. In a state where the braking force acting on the rear wheel does not depend on the brake operation performed by the rider of the straddle-type vehicle using the first brake operating portion, and the braking force acting on the front wheel does not depend on the brake operation performed by the rider using the second brake operating portion, in a situation where the braking force is automatically generated on at least one of the front wheel and the rear wheel by the automatic speed control, when the automatic speed control is canceled in response to the automatic speed control cancellation operation that is a brake operation performed by the rider using the brake operating portion for the other of the front wheel and the rear wheel without using the brake operating portion for the one wheel, the execution section executes the first control operation that automatically generates the braking force on the one wheel in a state where the braking force dependent on the brake operation performed by the rider using the brake operating portion for the other wheel acts on the other wheel. As a result, when the automatic speed control is canceled in response to the automatic speed control cancellation operation, the state where the braking force is automatically generated on the one wheel continues, so that a decrease in a total braking force acting on the front wheel and the rear wheel, which is contrary to the rider's intention, can be suppressed. Therefore, a decrease in braking force, which is not intended by the rider, can be suppressed, and causing discomfort to the rider can be suppressed.

### Brief Description of Drawings

Fig. 1 is a schematic diagram illustrating a schematic configuration of a straddle-type vehicle according to an embodiment of the invention.
Fig. 2 is a block diagram illustrating one example of a functional configuration of a control device according to the embodiment of the invention.
Fig. 3 is a schematic diagram illustrating a schematic configuration of a brake system of the straddle-type vehicle according to the embodiment of the invention.
Fig. 4 is a diagram illustrating one example of the transition of a braking force in a comparative example.
Fig. 5 is a flowchart illustrating one example of the flow of a process performed by the control device according to the embodiment of the invention.
Fig. 6 is a diagram illustrating a first example of the transition of a braking force in the embodiment of the invention.
Fig. 7 is a diagram illustrating a second example of the transition of a braking force in the embodiment of the invention.
Fig. 8 is a diagram illustrating a third example of the transition of a braking force in the embodiment of the invention.
Fig. 9 is a diagram illustrating a fourth example of the transition of a braking force in the embodiment of the invention.

### Description of Embodiments

Hereinafter, a control device and a control method according to the invention will be described with reference to the drawings.

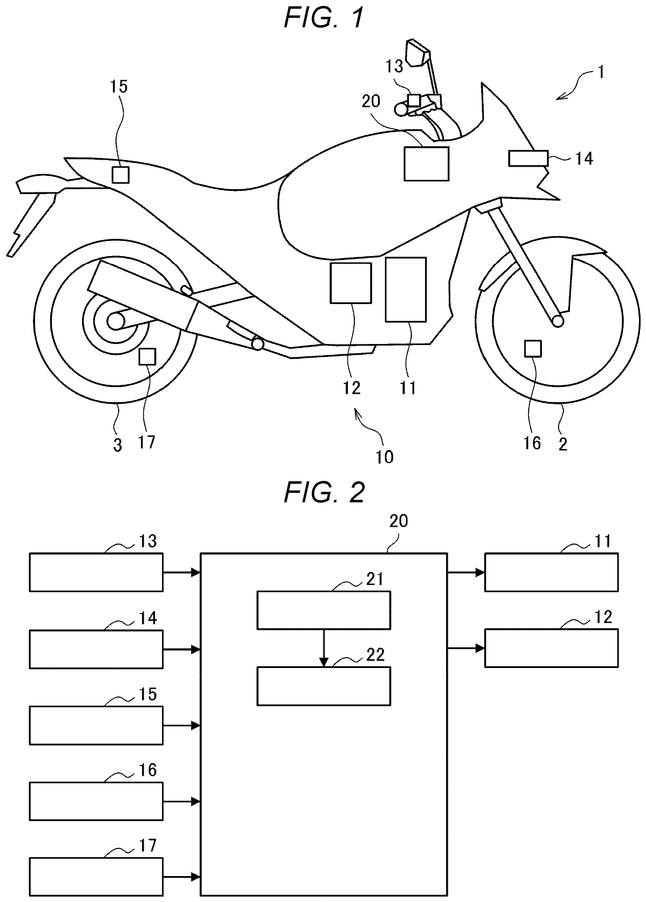

Incidentally, hereinafter, a control device used for a two-wheeled motorcycle will be described (refer to a straddle-type vehicle 1 in Fig. 1); however, a vehicle to be controlled by the control device according to the invention may be a straddle-type vehicle other than a two-wheeled motorcycle. The straddle-type vehicle refers to a vehicle that a rider rides astride. The straddle-type vehicle includes, for example, motorcycles (a motorized two-wheeled vehicle and a motorized three-wheeled vehicle), bicycles, and the like. The motorcycle includes a vehicle using an engine as a power source, a vehicle using an electric motor as a power source, and the like. The motorcycle includes, for example, a motorbike, a scooter, an electric scooter, and the like. The bicycle refers to a vehicle that can be propelled on a road by a rider's pedaling force applied to pedals. The bicycle includes a regular bicycle, an electric-assisted bicycle, an electric bicycle, and the like.

In addition, hereinafter, a case where an engine (specifically, an engine 11 in Fig. 1 to be described later) is installed as a drive source capable of outputting power to drive a drive wheel will be described; however, a drive source other than an engine (for example, an electric motor) may be installed as the drive source, or a plurality of drive sources may be installed.

In addition, hereinafter, a case where a control unit that controls the hydraulic pressure of a brake fluid (specifically, a hydraulic pressure control unit 12 in Fig. 1 to be described later) is adopted as a control unit for braking forces generated in wheels will be described; however, a control unit that controls the position of brake units themselves of the wheels using an electrical signal (so-called brake-by-wire) may be adopted as the control unit for braking forces generated on the wheels.

In addition, configurations, operations, and the like to be described below are one example, and the control device and the control method according to the invention are not limited to such configurations, operations, and the like.

In addition, hereinafter, the same or similar descriptions are simplified or omitted as appropriate. In addition, in each drawing, for the same or similar members or portions, the assignment of reference signs is omitted or the same reference signs are assigned. In addition, the illustration of detailed structures is simplified or omitted as appropriate.

### <Configuration of straddle-type vehicle>

A configuration of the straddle-type vehicle 1 according to an embodiment of the invention will be described with reference to Figs. 1 to 3.

Fig. 1 is a schematic diagram illustrating a schematic configuration of the straddle-type vehicle 1. The straddle-type vehicle 1 is a two-wheeled motorcycle corresponding to one example of the straddle-type vehicle according to the invention. As illustrated in Fig. 1, the straddle-type vehicle 1 includes a front wheel 2, a rear wheel 3, the engine 11, the hydraulic pressure control unit 12, an input device 13, a surrounding environment sensor 14, an inertia measurement device (IMU) 15, a front wheel speed sensor 16, a rear wheel speed sensor 17, and a control device (ECU) 20.

The engine 11 corresponds to one example of a drive source of the straddle-type vehicle 1, and can output power to drive a drive wheel (specifically, the rear wheel 3). For example, one or a plurality of cylinders in which combustion chambers are formed, fuel injectors that inject fuel toward the combustion chambers, and spark plugs are provided to the engine 11. An air-fuel mixture containing air and the fuel is formed in the combustion chamber by injecting the fuel from the fuel injector, and the air-fuel mixture is ignited by the spark plug to undergo combustion. Therefore, a piston provided in the cylinder reciprocates, thereby rotating a crankshaft. In addition, a throttle valve is provided to an intake pipe of the engine 11, and the amount of intake air to the combustion chamber changes according to a throttle opening degree that is an opening degree of the throttle valve.

The hydraulic pressure control unit 12 is a unit having a function of controlling a braking force generated on the wheel. For example, the hydraulic pressure control unit 12 is provided on an oil path connecting a master cylinder and a wheel cylinder, and includes components (for example, control valves and a pump) for controlling the brake hydraulic pressure of the wheel cylinder. The braking force generated on the wheel is controlled by controlling the operation of the components of the hydraulic pressure control unit 12. Incidentally, details of a brake system 10 including the hydraulic pressure control unit 12 will be described later.

The input device 13 accepts various operations performed by the rider. The input device 13 is provided to, for example, a handlebar, and includes a push button and the like used for a rider's operation. Information regarding the rider's operation using the input device 13 is output to the control device 20.

The surrounding environment sensor 14 detects surrounding environment information regarding an environment around the straddle-type vehicle 1. Specifically, the surrounding environment sensor 14 is provided to a front portion of the straddle-type vehicle 1, and detects surrounding environment information in front of the straddle-type vehicle 1. The surrounding environment information detected by the surrounding environment sensor 14 is output to the control device 20.

The surrounding environment information detected by the surrounding environment sensor 14 may be information related to a distance or a direction to a subject located around the straddle-type vehicle 1 (for example, a relative position, a relative distance, a relative speed, a relative acceleration, or the like), or may be a characteristic of a subject located around the straddle-type vehicle 1 (for example, the type of the subject, the shape of the subject itself, a mark attached to the subject, or the like). The surrounding environment sensor 14 is, for example, a radar, a Lidar sensor, an ultrasonic sensor, a camera, or the like.

Incidentally, the surrounding environment information can also be detected by a surrounding environment sensor installed to another vehicle or infrastructure equipment. Namely, the control device 20 can also acquire the surrounding environment information via wireless communication with the other vehicle or the infrastructure equipment.

The inertia measurement device 15 includes a 3-axis gyro sensor and a 3-direction acceleration sensor, and detects a posture of the straddle-type vehicle 1. The inertia measurement device 15 is provided to, for example, a body of the straddle-type vehicle 1. For example, the inertia measurement device 15 detects a pitch angle of the straddle-type vehicle 1 with respect to a horizontal direction, and outputs the detection result. The inertia measurement device 15 may detect another physical quantity that can be substantially converted into the pitch angle of the straddle-type vehicle 1 with respect to the horizontal direction. The pitch angle corresponds to an angle representing the inclination of a vehicle body (specifically, the body) of the straddle-type vehicle 1 in a vertical direction. Therefore, the pitch angle of the straddle-type vehicle 1 with respect to the horizontal direction corresponds to an angle representing how much the vehicle body of the straddle-type vehicle 1 is rotated with respect to the horizontal direction in a pitch direction that is a rotation direction about an axis along a vehicle left-right direction. The inertia measurement device 15 may include only a part of the 3-axis gyro sensor and the 3-direction acceleration sensor.

The front wheel speed sensor 16 is a wheel speed sensor that detects a wheel speed of the front wheel 2 (for example, a rotational frequency per unit time [rpm] or a movement distance per unit time [km/h] of the front wheel 2, or the like), and outputs the detection result. The front wheel speed sensor 16 may detect another physical quantity that can be substantially converted into the wheel speed of the front wheel 2. The front wheel speed sensor 16 is provided to the front wheel 2.

The rear wheel speed sensor 17 is a wheel speed sensor that detects a wheel speed of the rear wheel 3 (for example, a rotational frequency per unit time [rpm] or a movement distance per unit time [km/h] of the rear wheel 3, or the like), and outputs the detection result. The rear wheel speed sensor 17 may detect another physical quantity that can be substantially converted into the wheel speed of the rear wheel 3. The rear wheel speed sensor 17 is provided to the rear wheel 3.

The control device 20 controls the behavior of the straddle-type vehicle 1. For example, a part or the entirety of the control device 20 is composed of a microcomputer, a microprocessor unit, a memory, and the like. In addition, for example, a part or the entirety of the control device 20 may be composed of updatable one such as firmware, or may be a program module or the like executed by commands from a CPU or the like. For example, the control device 20 may be one device, or may be divided into a plurality of devices.

Fig. 2 is a block diagram illustrating one example of a functional configuration of the control device 20. As illustrated in Fig. 2, the control device 20 includes, for example, an acquisition section 21 and an execution section 22. In addition, the control device 20 communicates with each device of the straddle-type vehicle 1.

The acquisition section 21 acquires information from each device of the straddle-type vehicle 1, and outputs the information to the execution section 22. For example, the acquisition section 21 acquires information from the input device 13, the surrounding environment sensor 14, the inertia measurement device 15, the front wheel speed sensor 16, and the rear wheel speed sensor 17. Incidentally, in the present specification, acquiring information can include extracting or generating information (for example, calculation), and the like.

The execution section 22 executes various controls by controlling the operation of each device of the straddle-type vehicle 1. The execution section 22 controls, for example, the operation of the engine 11 and the hydraulic pressure control unit 12.

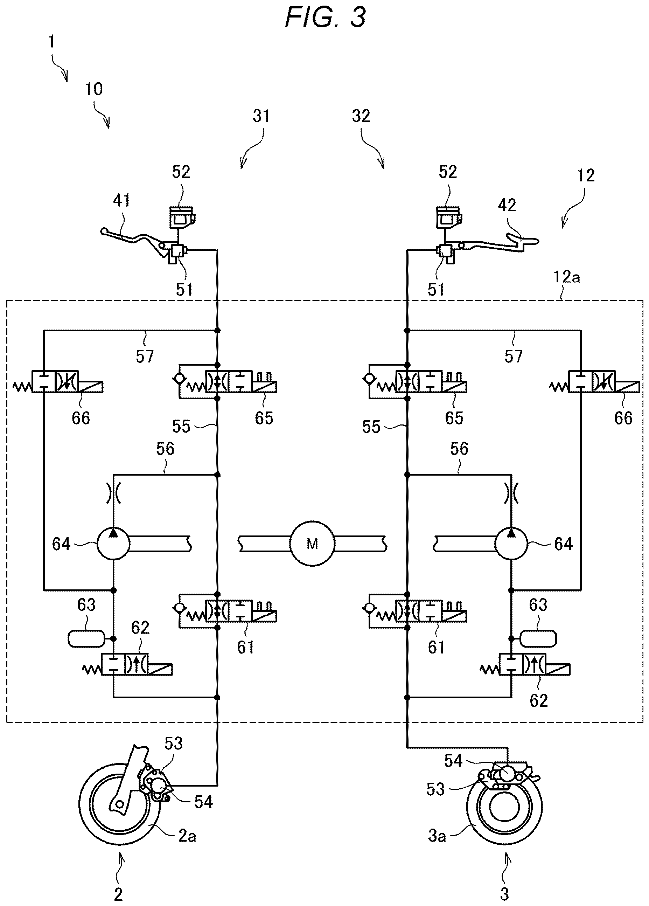

Here, a schematic configuration of the brake system 10 of the straddle-type vehicle 1 and control of a braking force generated in the straddle-type vehicle 1 will be described with reference to Fig. 3. Fig. 3 is a schematic diagram illustrating a schematic configuration of the brake system 10 of the straddle-type vehicle 1. As illustrated in Fig. 3, the brake system 10 includes a front wheel brake mechanism 31, a rear wheel brake mechanism 32, a first brake operating portion 41, and a second brake operating portion 42. The first brake operating portion 41 is, for example, a brake lever. The front wheel brake mechanism 31 brakes the front wheel 2 in conjunction with at least the first brake operating portion 41. Namely, the first brake operating portion 41 is a brake operating portion for at least the front wheel 2. The second brake operating portion 42 is, for example, a brake pedal. The rear wheel brake mechanism 32 brakes the rear wheel 3 in conjunction with at least the second brake operating portion 42. Namely, the second brake operating portion 42 is a brake operating portion for at least the rear wheel 3. A part of the front wheel brake mechanism 31 and a part of the rear wheel brake mechanism 32 are included in the hydraulic pressure control unit 12.

Each of the front wheel brake mechanism 31 and the rear wheel brake mechanism 32 includes a master cylinder 51 with a built-in piston (not illustrated); a reservoir 52 attached to the master cylinder 51; a brake caliper 53 held by the body of the straddle-type vehicle 1 and including brake pads (not illustrated); a wheel cylinder 54 provided to the brake caliper 53; a main flow path 55 through which the brake fluid in the master cylinder 51 flows to the wheel cylinder 54; an auxiliary flow path 56 through which the brake fluid in the wheel cylinder 54 is released; and a supply flow path 57 through which the brake fluid in the master cylinder 51 is supplied to the auxiliary flow path 56.

An inlet valve (EV) 61 is provided to the main flow path 55. The auxiliary flow path 56 bypasses the main flow path 55 between a wheel cylinder 54 side and a master cylinder 51 side with respect to the inlet valve 61. An outlet valve (AV) 62, an accumulator 63, and a pump 64 are provided to the auxiliary flow path 56 in order from an upstream side. A first valve (USV) 65 is provided between an end portion on a master cylinder 51 side of the main flow path 55 and a location where a downstream end portion of the auxiliary flow path 56 is connected to the main flow path 55. The supply flow path 57 communicates between the master cylinder 51 and a suction side of the pump 64 in the auxiliary flow path 56. A second valve (HSV) 66 is provided to the supply flow path 57.

The inlet valve 61 is, for example, an electromagnetic valve that is opened in a non-energized state and that is closed in an energized state. The outlet valve 62 is, for example, an electromagnetic valve that is closed in a non-energized state and that is opened in an energized state. The first valve 65 is, for example, an electromagnetic valve that is opened in a non-energized state and that is closed in an energized state. The second valve 66 is, for example, an electromagnetic valve that is closed in a non-energized state and that is opened in an energized state.

The hydraulic pressure control unit 12 includes components for controlling the brake hydraulic pressure which include the inlet valve 61, the outlet valve 62, the accumulator 63, the pump 64, the first valve 65, and the second valve 66, and a substrate 12a to which these components are provided and in which flow paths constituting the main flow path 55, the auxiliary flow path 56, and the supply flow path 57 are formed.

Incidentally, the substrate 12a may be formed of one member, or may be formed of a plurality of members. In addition, in a case where the substrate 12a is formed of a plurality of members, the components may be separately provided to different members.

The operation of the above-described components of the hydraulic pressure control unit 12 is controlled by the execution section 22 of the control device 20. As a result, a braking force generated on the front wheel 2 by the front wheel brake mechanism 31 and a braking force generated on the rear wheel 3 by the rear wheel brake mechanism 32 are controlled.

In normal times (namely, when a setting is made to generate a braking force on the wheel in response to a brake operation performed by the rider), the control device 20 causes the inlet valve 61 to be opened, causes the outlet valve 62 to be closed, causes the first valve 65 to be opened, and causes the second valve 66 to be closed. In this state, when the first brake operating portion 41 is operated, in the front wheel brake mechanism 31, the piston (not illustrated) of the master cylinder 51 is pushed in to increase the hydraulic pressure of the brake fluid in the wheel cylinder 54, and the brake pads (not illustrated) of the brake caliper 53 are pressed against a rotor 2a of the front wheel 2 to generate a braking force on the front wheel 2. In addition, when the second brake operating portion 42 is operated, in the rear wheel brake mechanism 32, the piston (not illustrated) of the master cylinder 51 is pushed in to increase the hydraulic pressure of the brake fluid in the wheel cylinder 54, and the brake pads (not illustrated) of the brake caliper 53 are pressed against a rotor 3a of the rear wheel 3 to generate a braking force on the rear wheel 3.

As described above, in the example of Fig. 3, the braking force acting on the rear wheel 3 depends on the brake operation performed by the rider using the second brake operating portion 42, and does not depend on the brake operation performed by the rider using the first brake operating portion 41. In addition, the braking force acting on the front wheel 2 depends on the brake operation performed by the rider using the first brake operating portion 41, and does not depend on the brake operation performed by the rider using the second brake operating portion 42. Namely, in the example of Fig. 3, the braking force acting on the rear wheel 3 does not depend on the brake operation performed by the rider using the first brake operating portion 41, and the braking force acting on the front wheel 2 does not depend on the brake operation performed by the rider using the second brake operating portion 42.

Here, the execution section 22 can execute automatic speed control to automatically control the speed of the straddle-type vehicle 1. Specifically, the execution section 22 automatically controls the speed of the straddle-type vehicle 1 by controlling at least one of a driving force and a braking force acting on the straddle-type vehicle 1 in the automatic speed control. For example, in the straddle-type vehicle 1, the rider can select a mode in which the automatic speed control is executed and a mode in which the automatic speed control is not executed by operating the input device 13.

Examples of the automatic speed control include control referred to as a cruise control mode. In the cruise control mode, a target speed is set in advance, and the execution section 22 causes the straddle-type vehicle 1 to decelerate when the speed of the straddle-type vehicle 1 is higher than the target speed, and causes the straddle-type vehicle 1 to accelerate when the speed of the straddle-type vehicle 1 is lower than the target speed. As a result, the speed of the straddle-type vehicle 1 is controlled to approach the target speed. For example, the execution section 22 can control the speed of the straddle-type vehicle 1 as described above by monitoring the value of the speed of the straddle-type vehicle 1 acquired based on the wheel speed of the front wheel 2 and the wheel speed of the rear wheel 3.

In addition, examples of the automatic speed control include control referred to as an adaptive cruise control mode. In the adaptive cruise control mode, the speed of the straddle-type vehicle 1 is not only controlled to approach the target speed, but also can be controlled such that the positional relationship between the straddle-type vehicle 1 and an object (for example, a front vehicle located in front of the straddle-type vehicle 1) is adjusted. For example, in the adaptive cruise control mode, when a front vehicle is detected by the surrounding environment sensor 14, the execution section 22 controls the speed of the straddle-type vehicle 1 such that a vehicle-to-vehicle distance between the straddle-type vehicle 1 and the front vehicle is maintained at a target vehicle-to-vehicle distance. Incidentally, in the adaptive cruise control mode, the speed of the straddle-type vehicle 1 may be controlled such that a passing time difference (specifically, a time it takes from a current time point until the straddle-type vehicle 1 passes the current position of the front vehicle) is maintained at a target passing time difference. Incidentally, control which is not canceled even when an accelerator pedal operation is performed by the rider and in which the above-described target vehicle-to-vehicle distance or the above-described target passing time difference changes according to the operation amount of the accelerator pedal operation may be executed as the automatic speed control.

The execution section 22 causes a braking force to be automatically generated in the straddle-type vehicle 1 when causing the speed of the straddle-type vehicle 1 to be decreased in the automatic speed control. In this case, for example, the execution section 22 sets a state where the inlet valve 61 is opened, the outlet valve 62 is closed, the first valve 65 is closed, and the second valve 66 is opened, and causes the pump 64 to be driven to increase the hydraulic pressure of the brake fluid in the wheel cylinder 54. As a result, the braking force can be automatically generated in the straddle-type vehicle 1.

Here, the execution section 22 controls a braking force acting on the front wheel 2 and a braking force acting on the rear wheel 3 independently of each other in the automatic speed control. Hereinafter, an example in which in the automatic speed control, the execution section 22 basically causes a braking force to be automatically generated only on the rear wheel 3 out of the front wheel 2 and the rear wheel 3, and in specific cases (for example, a case where the automatic generation of a braking force only on the rear wheel 3 results in an insufficient braking force being generated in the straddle-type vehicle 1), braking forces are automatically generated on both the front wheel 2 and the rear wheel 3 will be mainly described. However, as will be described later, the execution section 22 may cause a braking force to be automatically generated only on the front wheel 2 out of the front wheel 2 and the rear wheel 3 in the automatic speed control.

### <Operation of control device>

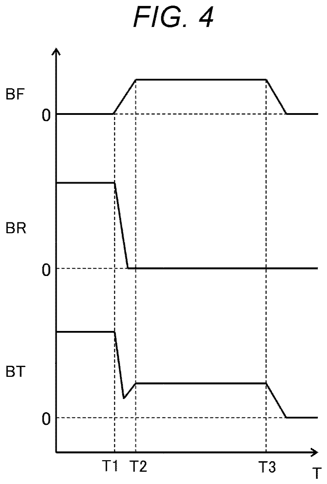

The operation of the control device 20 according to the embodiment of the invention will be described with reference to Figs. 4 to 9.

As described above, the control device 20 executes the automatic speed control to automatically control the speed of the straddle-type vehicle 1. When a brake operation is performed by the rider using the brake operating portion during execution of the automatic speed control, the automatic speed control is canceled in response to the brake operation.

As described above, hereinafter, an example in which in the automatic speed control, except for specific cases, basically, a braking force is automatically generated only on the rear wheel 3 out of the front wheel 2 and the rear wheel 3 will be described. Here, in a situation where a braking force is automatically generated on the rear wheel 3, which is one of the front wheel 2 and the rear wheel 3, by the automatic speed control, a brake operation using the first brake operating portion 41, which is a brake operating portion for the front wheel 2 which is the other of the front wheel 2 and the rear wheel 3, without using the second brake operating portion 42 which is a brake operating portion for the rear wheel 3 may be performed by the rider. In this case, the automatic speed control is canceled in response to the above-described brake operation.

Hereinafter, among brake operations that trigger the cancellation of the automatic speed control, a brake operation using the brake operating portion for the other wheel (in the above example, the front wheel 2) without using the brake operating portion for one wheel (in the above example, the rear wheel 3) on which a braking force is automatically generated by the automatic speed control is referred to as an automatic speed control cancellation operation. Incidentally, the automatic speed control cancellation operation refers to a series of operations from when the above-described brake operation is started until the brake operation is released after the continuation of a state where the brake operation is performed (for example, a series of operations from when the first brake operating portion 41 is gripped to when the first brake operating portion 41 is released).

Fig. 4 is a diagram illustrating one example of the transition of a braking force in a comparative example. In the comparative example, when the automatic speed control is canceled in response to the automatic speed control cancellation operation, the braking force automatically generated on the one wheel (in the above example, the rear wheel 3) is released.

In Fig. 4, the horizontal axis is a time axis T, and the transitions of a braking force BF acting on the front wheel 2, a braking force BR acting on the rear wheel 3, and a total braking force BT acting on the front wheel 2 and the rear wheel 3 are illustrated. In the comparative example of Fig. 4, before time point T1, the automatic speed control is executed, and the braking force BR is automatically generated only on the rear wheel 3 out of the front wheel 2 and the rear wheel 3 by the automatic speed control.

In the comparative example of Fig. 4, at time point T1, a brake operation using the first brake operating portion 41, which is a brake operating portion for the front wheel 2, without using the second brake operating portion 42 which is a brake operating portion for the rear wheel 3 is started by the rider. Then, the automatic speed control is canceled in response to the brake operation. Namely, the brake operation performed at time point T1 corresponds to the above-described automatic speed control cancellation operation. At time point T1, the brake operation using the first brake operating portion 41 that is a brake operating portion for the front wheel 2 is performed, so that the braking force BF acting on the front wheel 2 increases between time point T1 to time point T2.

Here, in the comparative example of Fig. 4, at time point T1, the automatic speed control is canceled, so that the braking force BR automatically generated on the rear wheel 3 is released, and thereafter, quickly decreases. In such a manner, in the process in which the braking force BF acting on the front wheel 2 increases due to the automatic speed control cancellation operation performed by the rider (namely, in a period from time point T1 to time point T2), the braking force BR acting on the rear wheel 3 quickly decreases, so that the total braking force BT acting on the front wheel 2 and the rear wheel 3 decreases against the rider's intention. Such a decrease in braking force, which is not intended by the rider, becomes a factor causing discomfort to the rider.

Incidentally, in the comparative example of Fig. 4, at time point T3 after time point T2, the brake operation using the first brake operating portion 41 which is started at time point T1 is released, and the braking force BF acting on the front wheel 2 decreases.

As described above, in the comparative example, when the automatic speed control is canceled in response to the automatic speed control cancellation operation, a decrease in braking force, which is not intended by the rider, may occur. On the other hand, according to the embodiment of the invention, by devising a process related to control of the braking force, as will be described later, suppressing a decrease in braking force, which is not intended by the rider, is achieved. Hereinafter, the process related to control of the braking force in the embodiment of the invention will be described.

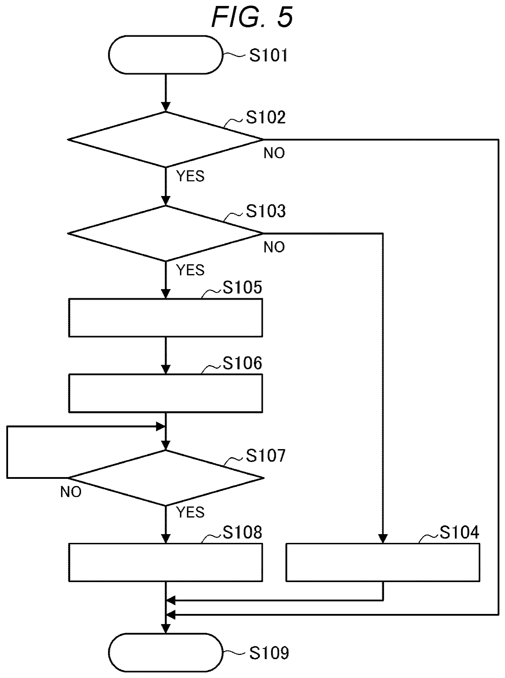

Fig. 5 is a flowchart illustrating one example of the flow of a process performed by the control device 20 according to the embodiment of the invention. Step S101 in Fig. 5 corresponds to the start of the control flow illustrated in Fig. 5. Step S109 in Fig. 5 corresponds to the end of the control flow illustrated in Fig. 5. The control flow illustrated in Fig. 5 is executed, for example, during execution of the automatic speed control.

When the control flow illustrated in Fig. 5 is started, in step S102, the execution section 22 determines whether a brake operation using the first brake operating portion 41, which is a brake operating portion for the front wheel 2, without using the second brake operating portion 42 which is a brake operating portion for the rear wheel 3 is started.

For example, when a sensor that detects an operation amount of the first brake operating portion 41 and the second brake operating portion 42 is provided to the straddle-type vehicle 1, the execution section 22 can determine whether the above-described brake operation is started, based on the detection result of the sensor. In addition, for example, when a sensor that detects a pressure of the brake fluid in the front wheel brake mechanism 31 and the rear wheel brake mechanism 32 (for example, a pressure of the brake fluid in the master cylinders 51 of the front wheel brake mechanism 31 and the rear wheel brake mechanism 32) is provided to the straddle-type vehicle 1, the execution section 22 can determine whether the above-described brake operation is started, based on the detection result of the sensor.

When it is determined that the brake operation using the first brake operating portion 41, which is a brake operating portion for the front wheel 2, without using the second brake operating portion 42 which is a brake operating portion for the rear wheel 3 is not started (step S102: NO), the control flow illustrated in Fig. 5 is ended. Incidentally, in this case, during execution of the automatic speed control, the control flow illustrated in Fig. 5 is repeatedly executed. On the other hand, when it is determined that the brake operation using the first brake operating portion 41, which is a brake operating portion for the front wheel 2, without using the second brake operating portion 42 which is a brake operating portion for the rear wheel 3 is started (step S102: YES), the process proceeds to step S103.

When YES is determined in step S102, in step S103, the execution section 22 determines whether the braking force BR is automatically generated on the rear wheel 3 by the automatic speed control.

For example, the execution section 22 can determine whether the braking force BR is automatically generated on the rear wheel 3 by the automatic speed control, based on a control command output from the control device 20 to the hydraulic pressure control unit 12. In addition, for example, when a sensor that detects a pressure of the brake fluid in the rear wheel brake mechanism 32 (for example, a pressure of the brake fluid in the wheel cylinder 54 of the rear wheel brake mechanism 32) is provided to the straddle-type vehicle 1, the execution section 22 can determine whether the braking force BR is automatically generated on the rear wheel 3 by the automatic speed control, based on the detection result of the sensor.

When it is determined that the braking force BR is not automatically generated on the rear wheel 3 by the automatic speed control (step S103: NO), the process proceeds to step S104. In step S104, the execution section 22 cancels the automatic speed control, and ends the control flow illustrated in Fig. 5.

On the other hand, when it is determined that the braking force BR is automatically generated on the rear wheel 3 by the automatic speed control (step S103: YES), the process proceeds to step S105. In step S105, the execution section 22 cancels the automatic speed control, and proceeds to step S106.

In step S106, the execution section 22 executes a first control operation. In an example of Fig. 5, the first control operation is an operation that automatically generates the braking force BR on the rear wheel 3 in a state where the braking force BF dependent on the brake operation performed by the rider using the first brake operating portion 41 that is a brake operating portion for the front wheel 2 acts on the front wheel 2. As a result, after the automatic speed control is canceled, the state where the braking force BR is automatically generated on the rear wheel 3 continues.

Specifically, as will be described later, in the first control operation, the execution section 22 automatically controls the braking force BR acting on the rear wheel 3 such that the total braking force BT acting on the front wheel 2 and the rear wheel 3 does not tend to decrease in the process in which the braking force BF acting on the front wheel 2 increases due to the automatic speed control cancellation operation performed by the rider. Incidentally, in the first control operation, the control of the braking force BR acting on the rear wheel 3 can be realized, for example, by controlling a force that closes the first valve 65, the rotational frequency of the pump 64, or the like.

In the example of Fig. 5, in the first control operation, the execution section 22 causes the braking force BR acting on the rear wheel 3 to be maintained at a reference braking force. For example, the reference braking force may be the braking force BR acting on the rear wheel 3 when the automatic speed control is canceled, or may be larger or less than the braking force BR.

However, as will be described later, in the first control operation, the execution section 22 may cause the braking force BR acting on the rear wheel 3 to be reduced over time. Incidentally, in the first control operation, the execution section 22 may cause the braking force BR acting on the rear wheel 3 to be changed in a mode different from the mode described above, and for example, may cause the braking force BR acting on the rear wheel 3 to be reduced over time and then cause the reduced braking force BR to be maintained.

Incidentally, as will be described later, in a situation where the braking force BF is automatically generated on the front wheel 2 by the automatic speed control, when the automatic speed control is canceled in response to the automatic speed control cancellation operation that is a brake operation using the second brake operating portion 42, which is a brake operating portion for the rear wheel 3, without using the first brake operating portion 41 which is a brake operating portion for the front wheel 2, the execution section 22 may execute the first control operation. In this case, the first control operation is an operation that automatically generates the braking force BF on the front wheel 2 in a state where the braking force BR dependent on the brake operation performed by the rider using the second brake operating portion 42 that is a brake operating portion for the rear wheel 3 acts on the rear wheel 3.

Subsequently to step S106, in step S107, the execution section 22 determines whether the brake operation performed by the rider using the first brake operating portion 41 that is a brake operating portion for the front wheel 2 is released.

For example, when a sensor that detects an operation amount of the first brake operating portion 41 is provided to the straddle-type vehicle 1, the execution section 22 can determine whether the above-described brake operation is released, based on the detection result of the sensor. In addition, for example, when a sensor that detects a pressure of the brake fluid in the front wheel brake mechanism 31 (for example, a pressure of the brake fluid in the master cylinder 51 of the front wheel brake mechanism 31) is provided to the straddle-type vehicle 1, the execution section 22 can determine whether the above-described brake operation is released, based on the detection result of the sensor.

When it is determined that the brake operation using the first brake operating portion 41 is not released (step S107: NO), step S107 is repeated. On the other hand, when it is determined that the brake operation using the first brake operating portion 41 is released (step S107: YES), the process proceeds to step S108.

When YES is determined in step S107, in step S108, the execution section 22 causes the braking force BR, which is automatically generated on the rear wheel 3, to be released, and ends the control flow illustrated in Fig. 5.

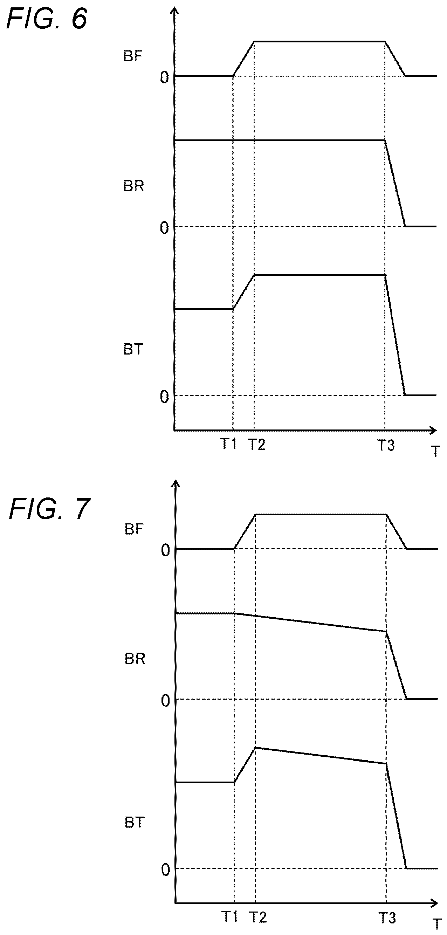

Hereinafter, examples of the transition of a braking force in the embodiment of the invention will be more specifically described with reference to Figs. 6 to 9.

Figs. 6 to 9 are diagrams illustrating a first example, a second example, a third example, and a fourth example of the transition of a braking force in the embodiment of the invention, respectively. In Figs. 6 to 9, similarly to Fig. 4 described above, the horizontal axis is the time axis T, and the transitions of the braking force BF acting on the front wheel 2, the braking force BR acting on the rear wheel 3, and the total braking force BT acting on the front wheel 2 and the rear wheel 3 are illustrated.

In the first example of Fig. 6, similarly to the comparative example of Fig. 4, before time point T1, the automatic speed control is executed, and the braking force BR is automatically generated only on the rear wheel 3 out of the front wheel 2 and the rear wheel 3 by the automatic speed control. Then, at time point T1, a brake operation using the first brake operating portion 41, which is a brake operating portion for the front wheel 2, without using the second brake operating portion 42 which is a brake operating portion for the rear wheel 3 is started by the rider, and the automatic speed control is canceled in response to the brake operation.

As described above, in the embodiment of the invention, in a situation where the braking force BR is automatically generated on the rear wheel 3 by the automatic speed control, when the automatic speed control is canceled in response to the automatic speed control cancellation operation that is a brake operation using the first brake operating portion 41, which is a brake operating portion for the front wheel 2, without using the second brake operating portion 42 which is a brake operating portion for the rear wheel 3, the execution section 22 executes the first control operation. Therefore, in the first example of Fig. 6, after time point T1 at which the automatic speed control is canceled, the state where the braking force BR is automatically generated on the rear wheel 3 continues. As a result, a decrease in the total braking force BT acting on the front wheel 2 and the rear wheel 3, which is contrary to the rider's intention, can be suppressed. Specifically, in the first example of Fig. 6, in a process in which the braking force BF acting on the front wheel 2 increases due to the automatic speed control cancellation operation performed by the rider (namely, in a period from time point T1 to time point T2), a decrease in the total braking force BT acting on the front wheel 2 and the rear wheel 3, which is contrary to the rider's intention, is suppressed. Therefore, a decrease in braking force, which is not intended by the rider, can be suppressed, and causing discomfort to the rider can be suppressed. Incidentally, when the automatic speed control cancellation operation is performed, the rider has the intention of increasing the braking force BF, so that the increase in the braking force BF does not lead to discomfort to the rider.

Here, in the first example of Fig. 6, in the first control operation, the execution section 22 causes the braking force BR acting on the rear wheel 3 to be maintained at the reference braking force. Specifically, in the first example of Fig. 6, the reference braking force is the braking force BR acting on the rear wheel 3 at time point T1 at which the automatic speed control is canceled. Then, at time point T3 after time point T2, the brake operation using the first brake operating portion 41 which is started at time point T1 is released, and accordingly, the braking force BR automatically generated on the rear wheel 3 by the first control operation is released. As a result, both the braking force BF acting on the front wheel 2 and the braking force BR acting on the rear wheel 3 decrease.

In the second example of Fig. 7, unlike the first example of Fig. 6, in the first control operation, the execution section 22 causes the braking force BR acting on the rear wheel 3 to be reduced over time. Therefore, in the second example of Fig. 7, after time point T1 at which the automatic speed control is canceled, the braking force BR acting on the rear wheel 3 is made to gradually decrease over time by the first control operation. Here, a decrease speed of the braking force BR before the braking force BR automatically generated on the rear wheel 3 in the first control operation is released (namely, a decrease speed of the braking force BR from time point T1 to time point T3) is lower than a decrease speed when the braking force BR decreases upon the cancellation of the automatic speed control and a decrease speed when the braking force BR decreases upon the release of the braking force BR automatically generated on the rear wheel 3 in the first control operation in the comparative example of Fig. 4. Therefore, in the second example of Fig. 7 as well, similarly to the first example of Fig. 6, in a process in which the braking force BF acting on the front wheel 2 increases due to the automatic speed control cancellation operation performed by the rider (namely, in a period from time point T1 to time point T2), a decrease in the total braking force BT acting on the front wheel 2 and the rear wheel 3, which is contrary to the rider's intention, is suppressed. Therefore, a decrease in braking force, which is not intended by the rider, can be suppressed, and causing discomfort to the rider can be suppressed.

Incidentally, in the first control operation, the adjustment of the decrease speed of the braking force BR acting on the rear wheel 3 can be realized, for example, by controlling a force that closes the first valve 65, the rotational frequency of the pump 64, or the like.

In addition, in the second example of Fig. 7 as well, similarly to the first example of Fig. 6, at time point T3 after time point T2, the brake operation using the first brake operating portion 41 which is started at time point T1 is released, and accordingly, the braking force BR automatically generated on the rear wheel 3 by the first control operation is released. As a result, both the braking force BF acting on the front wheel 2 and the braking force BR acting on the rear wheel 3 decrease.

As described above with reference to Figs. 6 and 7, in a situation where a braking force is automatically generated on at least the rear wheel 3 by the automatic speed control in a state where the braking force BR acting on the rear wheel 3 does not depend on the brake operation performed by the rider using the first brake operating portion 41 and the braking force BF acting on the front wheel 2 does not depend on the brake operation performed by the rider using the second brake operating portion 42, when the automatic speed control is canceled in response to the automatic speed control cancellation operation that is a brake operation performed by the rider using the first brake operating portion 41 without using the second brake operating portion 42, the execution section 22 of the control device 20 according to the embodiment of the invention executes the first control operation that automatically generates the braking force BR on the rear wheel 3 in a state where the braking force BF dependent on the brake operation performed by the rider using the first brake operating portion 41 acts on the front wheel 2. As a result, when the automatic speed control is canceled in response to the automatic speed control cancellation operation, the state where the braking force is automatically generated on the rear wheel 3 continues, so that a decrease in the total braking force BT acting on the front wheel 2 and the rear wheel 3, which is contrary to the rider's intention, can be suppressed. Therefore, a decrease in braking force, which is not intended by the rider, can be suppressed, and causing discomfort to the rider can be suppressed.

Specifically, in the first control operation, the execution section 22 automatically controls the braking force BR acting on the rear wheel 3 such that the total braking force BT acting on the front wheel 2 and the rear wheel 3 does not tend to decrease in the process in which the braking force BF acting on the front wheel 2 increases due to the automatic speed control cancellation operation performed by the rider. As a result, a decrease in the total braking force BT acting on the front wheel 2 and the rear wheel 3, which is contrary to the rider's intention, can be appropriately suppressed. Therefore, a decrease in braking force, which is not intended by the rider, can be more appropriately suppressed, and causing discomfort to the rider can be more appropriately suppressed.

Incidentally, in the first example of Fig. 6 and the second example of Fig. 7, in the first control operation, the execution section 22 automatically controls the braking force BR acting on the rear wheel 3 such that the total braking force BT acting on the front wheel 2 and the rear wheel 3 continues to increase without decreasing in the process in which the braking force BF acting on the front wheel 2 increases due to the automatic speed control cancellation operation performed by the rider. However, the fact that the total braking force BT does not tend to decrease can include, for example, the fact that the total braking force BT increases while moving up and down in short cycles, and the fact that the total braking force BT is maintained.

As in the first example of Fig. 6, in an example in which the braking force BR acting on the rear wheel 3 is maintained at the reference braking force in the first control operation, when the operation amount of the brake operation performed by the rider using the first brake operating portion 41 is not changed, the total braking force BT is maintained, and the total braking force BT changes according to the operation amount. As a result, the total braking force BT is easily changed according to the rider's intention, so that causing discomfort to the rider can be more appropriately suppressed.

As in the second example of Fig. 7, in an example in which the braking force BR acting on the rear wheel 3 is reduced over time in the first control operation, since the magnitude of the braking force BR automatically acted on the rear wheel 3 by the first control operation when released can be reduced, a change in the braking force BR when the braking force BR is released can be reduced. In addition, by reducing the braking force BR automatically acted on the rear wheel 3, a state where the adjustment of the total braking force BT is mainly left to the brake operation performed by the rider can be realized, and the adjustment of the total braking force BT according to the rider's intention is easily realized.

In addition, in the first example of Fig. 6 and the second example of Fig. 7, in the first control operation, the execution section 22 causes the braking force BR, which is automatically generated on the rear wheel 3, to be released at a timing dependent on the release timing of the brake operation performed by the rider using the first brake operating portion 41. As a result, when the brake operation using the first brake operating portion 41 is released, and the rider has no intention of braking the straddle-type vehicle 1, a situation where the braking force BR is unnecessarily generated on the rear wheel 3 can be suppressed.

Incidentally, in the first example of Fig. 6 and the second example of Fig. 7, in the first control operation, the execution section 22 causes the braking force BR, which is automatically generated on the rear wheel 3, to be released at the release timing of the brake operation performed by the rider using the first brake operating portion 41. However, the timing dependent on the release timing of the brake operation using the first brake operating portion 41 may not strictly coincide with the release timing of the brake operation using the first brake operating portion 41, and for example, may be a timing shifted by a predetermined time from the release timing.

In addition, in the first control operation, the execution section 22 may cause the braking force BR, which is automatically generated on the rear wheel 3, to be released before the release timing of the brake operation performed by the rider using the first brake operating portion 41. For example, as in the second example of Fig. 7, in an example in which the braking force BR acting on the rear wheel 3 is reduced over time in the first control operation, after the braking force BR acting on the rear wheel 3 reaches zero, the brake operation using the first brake operating portion 41 may be released. In that case, the release timing of the braking force BR automatically generated on the rear wheel 3 by the first control operation is earlier than the release timing of the brake operation using the first brake operating portion 41. As a result, after the release timing of the braking force BR automatically generated on the rear wheel 3 by the first control operation, the adjustment of the total braking force BT can be left to the brake operation performed by the rider, and the rider can adjust the total braking force BT according to his or her intention.

Here, from the viewpoint of optimizing the braking force BR automatically generated on the rear wheel 3 by the first control operation, it is preferable that in the first control operation, the execution section 22 controls the braking force BR acting on the rear wheel 3 based on various information.

For example, in the first control operation, the execution section 22 may control the braking force BR acting on the rear wheel 3 based on gradient information of a road surface. For example, the gradient information of the road surface may be information indicating the value of the gradient of the road surface on which the straddle-type vehicle 1 travels, may be rough information in which the degree of the gradient is expressed in several stages, or may be information that can be substantially converted into such information. For example, the acquisition section 21 can acquire the gradient information of the road surface based on information on the pitch angle of the straddle-type vehicle 1 detected by the inertia measurement device 15.

For example, when the road surface on which the straddle-type vehicle 1 travels is a flat road or a downhill road, in the first control operation, the execution section 22 may cause the braking force BR acting on the rear wheel 3 to be maintained at the reference braking force, and on the other hand, when the road surface on which the straddle-type vehicle 1 travels is an uphill road, in the first control operation, the execution section 22 may cause the braking force BR acting on the rear wheel 3 to be reduced over time. As a result, when the straddle-type vehicle 1 travels on an uphill road, an excessive increase in the total braking force BT can be suppressed.

Incidentally, as in the first example of Fig. 6, in an example in which the braking force BR acting on the rear wheel 3 is maintained at the reference braking force in the first control operation, the execution section 22 may change the reference braking force, for example, based on the gradient of a road surface on which the straddle-type vehicle 1 travels. In addition, as in the second example of Fig. 7, in an example in which the braking force BR acting on the rear wheel 3 is reduced over time in the first control operation, the execution section 22 may change the decrease speed of the braking force BR before the braking force BR automatically generated on the rear wheel 3 in the first control operation is released, for example, based on the gradient of a road surface on which the straddle-type vehicle 1 travels.

In addition, for example, in the first control operation, the execution section 22 may control the braking force BR acting on the rear wheel 3, based on brake state information of the front wheel 2. For example, the brake state information of the front wheel 2 may be information indicating the value of the braking force BF acting on the front wheel 2, may be rough information in which the degree of the braking force BF is expressed in several stages, or may be information that can be substantially converted into such information (for example, information regarding the operation amount of the first brake operating portion 41, information regarding the pressure of the brake fluid in the front wheel brake mechanism 31, or the like).

For example, in the first control operation, the execution section 22 may control the braking force BR acting on the rear wheel 3, based on the brake state information of the front wheel 2 in the automatic speed control cancellation operation performed by the rider. For example, as in the second example of Fig. 7, in an example in which the braking force BR acting on the rear wheel 3 is reduced over time in the first control operation, the execution section 22 may change the decrease speed of the braking force BR (namely, the decrease speed of the braking force BR from time point T1 to time point T3) before the braking force BR automatically generated on the rear wheel 3 in the first control operation is released, based on the brake state information of the front wheel 2 in the automatic speed control cancellation operation performed by the rider.

In this case, for example, when the braking force BF acting on the front wheel 2 is large in the automatic speed control cancellation operation performed by the rider, compared to when the braking force BF is small, the execution section 22 may cause the decrease speed of the braking force BR to be increased before the braking force BR automatically generated on the rear wheel 3 in the first control operation is released. Here, when the braking force BF acting on the front wheel 2 is large, a change in the braking force BR acting on the rear wheel 3 is unlikely to cause discomfort to the rider. Therefore, a state where the adjustment of the total braking force BT is mainly left to the brake operation performed by the rider can be realized earlier while suppressing causing discomfort to the rider.

Incidentally, as in the first example of Fig. 6, in an example in which the braking force BR acting on the rear wheel 3 is maintained at the reference braking force in the first control operation, the execution section 22 may change the reference braking force, for example, based on the brake state information of the front wheel 2 in the automatic speed control cancellation operation performed by the rider.

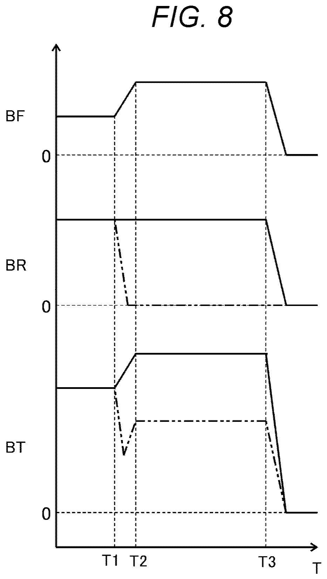

In the third example of Fig. 8, before time point T1, similarly to the first example of Fig. 6, the automatic speed control is executed, but unlike the first example of Fig. 6, the braking forces BF and BR are automatically generated on both the front wheel 2 and the rear wheel 3, respectively, by the automatic speed control. Then, at time point T1, a brake operation using the first brake operating portion 41, which is a brake operating portion for the front wheel 2, without using the second brake operating portion 42 which is a brake operating portion for the rear wheel 3 is started by the rider, and the automatic speed control is canceled in response to the brake operation.

As in the comparative example of Fig. 4, the transition illustrated by a two-dot chain line in Fig. 8 is a transition when at time point T1, due to the cancellation of the automatic speed control, the braking force BR automatically generated on the rear wheel 3 is released, and thereafter, quickly decreases. In this case as well, similarly to the comparative example of Fig. 4, in a process in which the braking force BF acting on the front wheel 2 increases due to the automatic speed control cancellation operation performed by the rider (namely, in a period from time point T1 to time point T2), the total braking force BT acting on the front wheel 2 and the rear wheel 3 decreases against the rider's intention. Such a decrease in braking force, which is not intended by the rider, becomes a factor causing discomfort to the rider.

On the other hand, in the embodiment of the invention, as illustrated by solid lines in Fig. 8, the automatic speed control is canceled in response to the automatic speed control cancellation operation started at time point T1, and the first control operation is executed. Therefore, after time point T1 at which the automatic speed control is canceled, the state where the braking force BR is automatically generated on the rear wheel 3 continues. As a result, in the third example of Fig. 8 as well, similarly to the first example of Fig. 6, in the process in which the braking force BF acting on the front wheel 2 increases due to the automatic speed control cancellation operation performed by the rider (namely, in the period from time point T1 to time point T2), a decrease in the total braking force BT acting on the front wheel 2 and the rear wheel 3, which is contrary to the rider's intention, is suppressed. Therefore, a decrease in braking force, which is not intended by the rider, can be suppressed, and causing discomfort to the rider can be suppressed.

Incidentally, in the third example of Fig. 8, in the first control operation, the braking force BR acting on the rear wheel 3 is maintained at the reference braking force, but as in the second example of Fig. 7, in the first control operation, the braking force BR acting on the rear wheel 3 may be reduced over time.

In addition, in the third example of Fig. 8 as well, similarly to the first example of Fig. 6 and the second example of Fig. 7, in the first control operation, in a state where the braking force BF dependent on the brake operation performed by the rider using the first brake operating portion 41 acts on the front wheel 2, the braking force BR is automatically generated on the rear wheel 3. Here, in the third example of Fig. 8, in a situation where the braking force BF is automatically generated on the front wheel 2 by the automatic speed control, the brake operation using the first brake operating portion 41 is started by the rider. Then, when the automatic speed control is canceled in response to the brake operation, the first valve 65 is opened, and the master cylinder 51 and the wheel cylinder 54 communicate with each other via the main flow path 55. Therefore, the braking force BF generated on the front wheel 2 after the cancellation of the automatic speed control is a braking force that is increased by a braking force corresponding to the operation amount of the brake operation, with respect to the braking force generated by the automatic speed control. Namely, in the first control operation, in a state where the braking force BF increased by the braking force corresponding to the operation amount of the brake operation performed by the rider using the first brake operating portion 41, with respect to the braking force generated by the automatic speed control, acts on the front wheel 2, the braking force BR may be automatically generated on the rear wheel 3.

Here, as in the third example of Fig. 8, in a situation where the braking forces BF and BR are automatically generated on both the front wheel 2 and the rear wheel 3, respectively, when the first control operation is executed in a case where the automatic speed control is canceled in response to the automatic speed control cancellation operation performed by the rider, in the first control operation, the execution section 22 may control the braking force BR acting on the rear wheel 3, based on brake state information of the front wheel 2 in the automatic speed control.

For example, as in the second example of Fig. 7, in an example in which the braking force BR acting on the rear wheel 3 is reduced over time in the first control operation, the execution section 22 may change the decrease speed of the braking force BR (namely, the decrease speed of the braking force BR from time point T1 to time point T3) before the braking force BR automatically generated on the rear wheel 3 in the first control operation is released, based on the brake state information of the front wheel 2 in the automatic speed control.

In this case, for example, when the braking force BF automatically acting on the front wheel 2 is large at the release timing of the automatic speed control or immediately before the release timing, compared to when the braking force BF is small, the execution section 22 may cause the decrease speed of the braking force BR to be increased before the braking force BR automatically generated on the rear wheel 3 in the first control operation is released. As described above, when the braking force BF acting on the front wheel 2 is large, a change in the braking force BR acting on the rear wheel 3 is unlikely to cause discomfort to the rider. Therefore, a state where the adjustment of the total braking force BT is mainly left to the brake operation performed by the rider can be realized earlier while suppressing causing discomfort to the rider.

Incidentally, as in the first example of Fig. 6, in an example in which the braking force BR acting on the rear wheel 3 is maintained at the reference braking force in the first control operation, the execution section 22 may change the reference braking force, for example, based on the brake state information of the front wheel 2 in the automatic speed control.

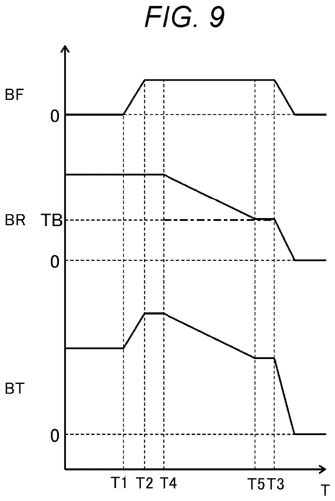

In the fourth example of Fig. 9, similarly to the first example of Fig. 6, before time point T1, the automatic speed control is executed, and the braking force BR is automatically generated only on the rear wheel 3 out of the front wheel 2 and the rear wheel 3 by the automatic speed control. Then, at time point T1, a brake operation using the first brake operating portion 41, which is a brake operating portion for the front wheel 2, without using the second brake operating portion 42 which is a brake operating portion for the rear wheel 3 is started by the rider, and the automatic speed control is canceled in response to the brake operation. Then, in the fourth example of Fig. 9, similarly to the first example of Fig. 6, the automatic speed control is canceled in response to the automatic speed control cancellation operation started at time point T1, and the first control operation is executed.

Here, the execution section 22 can execute interlocking brake control. The interlocking brake control is control that causes a braking force, which is dependent on a brake operation performed by the rider using the brake operating portion for the other of the front wheel 2 and the rear wheel 3, to act on one of the front wheel 2 and the rear wheel 3. In the fourth example of Fig. 9, at time point T4 after time point T2, the interlocking brake control that causes a braking force, which is dependent on a brake operation performed by the rider using the first brake operating portion 41 that is a brake operating portion for the front wheel 2, to act on the rear wheel 3 is enabled. The interlocking brake control is enabled, for example, when a target braking force TB can be generated on the rear wheel 3 after the brake operation using the first brake operating portion 41 is started. The target braking force TB is set, for example, according to the braking force BF acting on the front wheel 2. In Fig. 9, the target braking force TB set in the enabled interlocking brake control is illustrated by a one-dot chain line.

Then, after time point T4 at which the interlocking brake control is enabled, the execution section 22 executes a second control operation that automatically generates the braking force BR, which is dependent on a control amount (for example, the target braking force TB) in the interlocking brake control, on the rear wheel 3. For example, in the fourth example of Fig. 9, in the second control operation, the execution section 22 controls the braking force BR acting on the rear wheel 3 to approach the target braking force TB. As a result, the braking force BR acting on the rear wheel 3 gradually decreases to approach the target braking force TB after time point T4, and coincides with the target braking force TB at time point T5. Thereafter, from time point T5 to time point T3, the braking force BR acting on the rear wheel 3 is maintained at the target braking force TB.

As in the fourth example of Fig. 9, when the interlocking brake control is enabled during execution of the first control operation, the braking force BR acting on the rear wheel 3 can be controlled according to the control amount in the interlocking brake control by executing the second control operation. As a result, discomfort to the rider caused by a deviation of the braking force BR acting on the rear wheel 3 from the control amount in the interlocking brake control can be suppressed.

Incidentally, in the fourth example of Fig. 9, in the second control operation, the braking force BR acting on the rear wheel 3 is controlled to approach the target braking force TB. However, in the second control operation, the execution section 22 may cause the braking force BR acting on the rear wheel 3 to be changed in a mode different from the mode described above, and for example, may control the braking force BR acting on the rear wheel 3 to approach a value shifted by a predetermined amount from the target braking force TB.

The examples of the process performed by the control device 20 have been described above with reference to the flowchart of Fig. 5 and each example of Figs. 6 to 9. However, the process performed by the control device 20 may be a process that is changed from the examples of the process described above.

For example, the example in which in a situation where the braking force BR is automatically generated on the rear wheel 3 by the automatic speed control, when the automatic speed control is canceled in response to the automatic speed control cancellation operation that is a brake operation using the first brake operating portion 41, which is a brake operating portion for the front wheel 2, without using the second brake operating portion 42 which is a brake operating portion for the rear wheel 3, the first control operation is executed has been described above. However, in a situation where the braking force BF is automatically generated on the front wheel 2 by the automatic speed control, when the automatic speed control is canceled in response to the automatic speed control cancellation operation that is a brake operation using the second brake operating portion 42, which is a brake operating portion for the rear wheel 3, without using the first brake operating portion 41 which is a brake operating portion for the front wheel 2, the execution section 22 may execute the first control operation.

In this case, in the first control operation, the execution section 22 causes the braking force BF to be automatically generated on the front wheel 2 in a state where the braking force BR dependent on the brake operation performed by the rider using the second brake operating portion 42 that is a brake operating portion for the rear wheel 3 acts on the rear wheel 3. Incidentally, in a situation where the braking force BF is automatically generated only on the front wheel 2 out of the front wheel 2 and the rear wheel 3 by the automatic speed control, when the automatic speed control is canceled in response to the automatic speed control cancellation operation using the second brake operating portion 42, the first control operation may be executed, or in a situation where the braking forces BF and BR are automatically generated on both the front wheel 2 and the rear wheel 3, respectively, by the automatic speed control, when the automatic speed control is canceled in response to the automatic speed control cancellation operation using the second brake operating portion 42, the first control operation may be executed. As a result, in these cases, a decrease in braking force, which is not intended by the rider, can be suppressed, and causing discomfort to the rider can be suppressed.

In addition, in the brake system 10 illustrated in Fig. 3, the braking force BR acting on the rear wheel 3 does not depend on the brake operation performed by the rider using the first brake operating portion 41, and the braking force BF acting on the front wheel 2 does not depend on the brake operation performed by the rider using the second brake operating portion 42. However, the brake system 10 to be controlled by the control device 20 may be able to assume at least the above-described state, and can transition between the above-described state and another state. For example, the brake system 10 to be controlled by the control device 20 may be able to transition between the above-described state and a state where the braking force BR acting on the rear wheel 3 depends on the brake operation performed by the rider using the first brake operating portion 41 or a state where the braking force BF acting on the front wheel 2 depends on the brake operation performed by the rider using the second brake operating portion 42.

### <Effects of control device>

Effects of the control device 20 according to the embodiment of the invention will be described.

The control device 20 includes the execution section 22 that executes automatic speed control to automatically control a speed of the straddle-type vehicle 1. In the automatic speed control, the braking force BF acting on the front wheel 2 and the braking force BR acting on the rear wheel 3 are controlled independently of each other. In a state where the braking force BR acting on the rear wheel 3 does not depend on a brake operation performed by a rider of the straddle-type vehicle 1 using the first brake operating portion 41, and the braking force BF acting on the front wheel 2 does not depend on a brake operation performed by the rider using the second brake operating portion 42, in a situation where a braking force is automatically generated on at least one (in the above example, the rear wheel 3) of the front wheel 2 and the rear wheel 3 by the automatic speed control, when the automatic speed control is canceled in response to an automatic speed control cancellation operation that is a brake operation performed by the rider using the brake operating portion for the other (in the above example, the front wheel 2) of the front wheel 2 and the rear wheel 3 without using the brake operating portion for the one wheel, the execution section 22 executes a first control operation that automatically generates a braking force on the one wheel in a state where a braking force dependent on the brake operation performed by the rider using the brake operating portion for the other wheel acts on the other wheel. As a result, when the automatic speed control is canceled in response to the automatic speed control cancellation operation, the state where the braking force is automatically generated on the one wheel continues, so that a decrease in a total braking force BT acting on the front wheel 2 and the rear wheel 3, which is contrary to the rider's intention, can be suppressed. Therefore, a decrease in braking force, which is not intended by the rider, can be suppressed, and causing discomfort to the rider can be suppressed.

Preferably, in the control device 20, in the first control operation, the execution section 22 automatically controls the braking force acting on the one wheel (in the above example, the rear wheel 3) such that a total braking force BT acting on the front wheel 2 and the rear wheel 3 does not tend to decrease in a process in which the braking force acting on the other wheel (in the above example, the front wheel 2) increases due to the automatic speed control cancellation operation performed by the rider. As a result, a decrease in the total braking force BT acting on the front wheel 2 and the rear wheel 3, which is contrary to the rider's intention, can be appropriately suppressed. Therefore, a decrease in braking force, which is not intended by the rider, can be more appropriately suppressed, and causing discomfort to the rider can be more appropriately suppressed.

Preferably, in the control device 20, in the first control operation, the execution section 22 causes the braking force acting on the one wheel (in the above example, the rear wheel 3) to be maintained at a reference braking force. As a result, when the operation amount of the brake operation performed by the rider using the brake operating portion for the other wheel (in the above example, the front wheel 2) is not changed, the total braking force BT is maintained, and the total braking force BT changes according to the operation amount. As a result, the total braking force BT is easily changed according to the rider's intention, so that causing discomfort to the rider can be more appropriately suppressed.

Preferably, in the control device 20, in the first control operation, the execution section 22 causes the braking force acting on the one wheel (in the above example, the rear wheel 3) to be reduced over time. As a result, the magnitude of the braking force automatically acted on the one wheel by the first control operation when released can be reduced, so that a change in the braking force automatically acting on the one wheel when released can be reduced. In addition, by reducing the braking force automatically acted on the one wheel, a state where the adjustment of the total braking force BT is mainly left to the brake operation performed by the rider can be realized, and the adjustment of the total braking force BT according to the rider's intention is easily realized.

Preferably, in the control device 20, in the first control operation, the execution section 22 causes the braking force, which is automatically generated on the one wheel (in the above example, the rear wheel 3), to be released at a timing dependent on a release timing of the brake operation performed by the rider using the brake operating portion for the other wheel (in the above example, the front wheel 2). As a result, when the brake operation using the brake operating portion for the other wheel is released, and the rider has no intention of braking the straddle-type vehicle 1, a situation where the braking force is unnecessarily generated on the one wheel can be suppressed.

Preferably, in the control device 20, in the first control operation, the execution section 22 causes the braking force, which is automatically generated on the one wheel (in the above example, the rear wheel 3), to be released before a release timing of the brake operation performed by the rider using the brake operating portion for the other wheel (in the above example, the front wheel 2). As a result, after the release timing of the braking force automatically generated on the one wheel by the first control operation, the adjustment of the total braking force BT can be left to the brake operation performed by the rider, and the rider can adjust the total braking force BT according to his or her intention.

Preferably, in the control device 20, in the first control operation, the execution section 22 controls the braking force acting on the one wheel (in the above example, the rear wheel 3), based on gradient information of a road surface. As a result, the braking force automatically generated on the one wheel by the first control operation can be optimized according to the gradient of the road surface.

Preferably, in the control device 20, in the first control operation, the execution section 22 controls the braking force acting on the one wheel (in the above example, the rear wheel 3), based on brake state information of the other wheel (in the above example, the front wheel 2). As a result, the braking force automatically generated on the one wheel by the first control operation can be optimized according to the brake state of the other wheel while suppressing causing discomfort to the rider. For example, a state where the adjustment of the total braking force BT is mainly left to the brake operation performed by the rider can be realized earlier.

Preferably, in the control device 20, in the first control operation, the execution section 22 controls the braking force acting on the one wheel (in the above example, the rear wheel 3), based on the brake state information in the automatic speed control cancellation operation performed by the rider. As a result, optimizing the braking force, which is automatically generated on the one wheel by the first control operation, according to the brake state of the other wheel (in the above example, the front wheel 2) is appropriately realized while suppressing causing discomfort to the rider.

Preferably, in the control device 20, in a situation where the braking forces BF and BR are automatically generated on both the front wheel 2 and the rear wheel 3, respectively, when the automatic speed control is canceled in response to the automatic speed control cancellation operation performed by the rider, the first control operation is executed. In the first control operation, the execution section 22 controls the braking force acting on the one wheel (in the above example, the rear wheel 3), based on the brake state information in the automatic speed control. As a result, optimizing the braking force, which is automatically generated on the one wheel by the first control operation, according to the brake state of the other wheel (in the above example, the front wheel 2) is appropriately realized while suppressing causing discomfort to the rider.

Preferably, in the control device 20, when interlocking brake control that causes the braking force, which is dependent on the brake operation performed by the rider using the brake operating portion for the other wheel (in the above example, the front wheel 2), to act on the one wheel (in the above example, the rear wheel 3) is enabled during an execution of the first control operation, the execution section 22 executes a second control operation that automatically generates a braking force, which is dependent on a control amount of the interlocking brake control, on the one wheel. As a result, discomfort to the rider caused by a large deviation of the braking force acting on the one wheel from the control amount in the interlocking brake control can be suppressed.

The invention is not limited to the description of the embodiment. For example, only a part of the embodiment may be implemented.

### Reference Signs List

1: Straddle-type vehicle
2: Front wheel
2a: Rotor
3: Rear wheel
3a: Rotor
10: Brake system
11: Engine
12: Hydraulic pressure control unit
12a: Substrate
13: Input device
14: Surrounding environment sensor
15: Inertia measurement device
16: Front wheel speed sensor
17: Rear wheel speed sensor
20: Control device
21: Acquisition section
22: Execution section
31: Front wheel brake mechanism
32: Rear wheel brake mechanism
41: First brake operating portion
42: Second brake operating portion
51: Master cylinder
52: Reservoir
53: Brake caliper
54: Wheel cylinder
55: Main flow path
56: Auxiliary flow path
57: Supply flow path
61: Inlet valve
62: Outlet valve
63: Accumulator
64: Pump
65: First valve
66: Second valve
BF: Braking force
BR: Braking force
BT: Total braking force
T: Time axis
T1: Time point
T2: Time point
T3: Time point
T4: Time point
T5: Time point
TB: Target braking force

## Claims

1. A control device (20) that controls a behavior of a straddle-type vehicle (1) including a first brake operating portion (41) that is a brake operating portion for at least a front wheel (2) and a second brake operating portion (42) that is a brake operating portion for at least a rear wheel (3), the device comprising:
an execution section (22) that executes automatic speed control to automatically control a speed of the straddle-type vehicle (1),
wherein in the automatic speed control, a braking force (BF) acting on the front wheel (2) and a braking force (BR) acting on the rear wheel (3) are controlled independently of each other, and
in a state where the braking force (BR) acting on the rear wheel (3) does not depend on a brake operation performed by a rider of the straddle-type vehicle (1) using the first brake operating portion (41), and the braking force (BF) acting on the front wheel (2) does not depend on a brake operation performed by the rider using the second brake operating portion (42), in a situation where a braking force is automatically generated on at least one of the front wheel (2) and the rear wheel (3) by the automatic speed control, when the automatic speed control is canceled in response to an automatic speed control cancellation operation that is a brake operation performed by the rider using the brake operating portion for the other of the front wheel (2) and the rear wheel (3) without using the brake operating portion for the one wheel, the execution section (22) executes a first control operation that automatically generates a braking force on the one wheel in a state where a braking force dependent on the brake operation performed by the rider using the brake operating portion for the other wheel acts on the other wheel.

2. The control device according to claim 1,
wherein in the first control operation, the execution section (22) automatically controls the braking force acting on the one wheel such that a total braking force (BT) acting on the front wheel (2) and the rear wheel (3) does not tend to decrease in a process in which the braking force acting on the other wheel increases due to the automatic speed control cancellation operation performed by the rider.

3. The control device according to claim 1,
wherein in the first control operation, the execution section (22) causes the braking force acting on the one wheel to be maintained at a reference braking force.

4. The control device according to claim 1,
wherein in the first control operation, the execution section (22) causes the braking force acting on the one wheel to be reduced over time.

5. The control device according to claim 1,
wherein in the first control operation, the execution section (22) causes the braking force, which is automatically generated on the one wheel, to be released at a timing dependent on a release timing of the brake operation performed by the rider using the brake operating portion for the other wheel.

6. The control device according to claim 1,
wherein in the first control operation, the execution section (22) causes the braking force, which is automatically generated on the one wheel, to be released before a release timing of the brake operation performed by the rider using the brake operating portion for the other wheel.

7. The control device according to claim 1,
wherein in the first control operation, the execution section (22) controls the braking force acting on the one wheel, based on gradient information of a road surface.

8. The control device according to claim 1,
wherein in the first control operation, the execution section (22) controls the braking force acting on the one wheel, based on brake state information of the other wheel.

9. The control device according to claim 8,
wherein in the first control operation, the execution section (22) controls the braking force acting on the one wheel, based on the brake state information in the automatic speed control cancellation operation performed by the rider.

10. The control device according to claim 8,
wherein in a situation where the braking forces (BF and BR) are automatically generated on both the front wheel (2) and the rear wheel (3), respectively, when the automatic speed control is canceled in response to the automatic speed control cancellation operation performed by the rider, the first control operation is executed, and
in the first control operation, the execution section (22) controls the braking force acting on the one wheel, based on the brake state information in the automatic speed control.

11. The control device according to any one of claims 1 to 10,
when interlocking brake control that causes the braking force, which is dependent on the brake operation performed by the rider using the brake operating portion for the other wheel, to act on the one wheel is enabled during an execution of the first control operation, the execution section (22) executes a second control operation that automatically generates a braking force, which is dependent on a control amount of the interlocking brake control, on the one wheel.

12. A control method for controlling a behavior of a straddle-type vehicle (1) including a first brake operating portion (41) that is a brake operating portion for at least a front wheel (2) and a second brake operating portion (42) that is a brake operating portion for at least a rear wheel (3), the method comprising:
causing an execution section (22) of a control device (20) to execute automatic speed control to automatically control a speed of the straddle-type vehicle (1),
wherein in the automatic speed control, a braking force (BF) acting on the front wheel (2) and a braking force (BR) acting on the rear wheel (3) are controlled independently of each other, and
in a state where the braking force (BR) acting on the rear wheel (3) does not depend on a brake operation performed by a rider of the straddle-type vehicle (1) using the first brake operating portion (41), and the braking force (BF) acting on the front wheel (2) does not depend on a brake operation performed by the rider using the second brake operating portion (42), in a situation where a braking force is automatically generated on at least one of the front wheel (2) and the rear wheel (3) by the automatic speed control, when the automatic speed control is canceled in response to an automatic speed control cancellation operation that is a brake operation performed by the rider using the brake operating portion for the other of the front wheel (2) and the rear wheel (3) without using the brake operating portion for the one wheel, the execution section (22) executes a first control operation that automatically generates a braking force on the one wheel in a state where a braking force dependent on the brake operation performed by the rider using the brake operating portion for the other wheel acts on the other wheel.
